# EUROPÄISCHE PATENTANMELDUNG

(11) **EP 3 961 864 A1**
(43) Veröffentlichungstag der Anmeldung: **02.03.2022**
(21) Anmeldenummer: 20193608.5
(22) Anmeldetag: 31.08.2020
(51) Int. Cl.: H02K 1/18, H02K 5/24, H02K 5/20

(54) **ELEKTRISCHE MASCHINE MIT ELASTISCH ANGEORDNETEM STATOR**

(71) Anmelder: Siemens Aktiengesellschaft, 80333 München (DE)
(72) Erfinder: Wieschalla, Martin, 12305 Berlin (DE)

(57) **Zusammenfassung**

Die Erfindung betrifft eine elektrische Maschine (1), welche ein stationäres Aktivteil aufweist, wobei das stationäre Aktivteil (3) mittels einer geometrischen Struktur (5) elastisch angeordnet ist, sowie ein Verfahren zum Betrieb der elektrischen Maschine (1), wobei der Betrieb der elektrischen Maschine (1) simuliert wird. Zur Ausführung des Verfahrens ist ein Computerprogrammprodukt vorgesehen, wobei dieses computerausführbare Programmmittel aufweist.

## Beschreibung

Die Erfindung betrifft eine elektrische Maschine, welche ein stehendes Funktionselement und ein rotierendes Funktionselement aufweist. Die Erfindung betrifft ferner ein Verfahren zum Betrieb der elektrischen Maschine.

Das stehende Funktionselement der elektrischen Maschine ist ein Stator. Das rotierende Funktionselement der elektrischen Maschine ist ein Rotor. Die Funktionselemente können als Aktivteile der elektrischen Maschine ausgelegt sein. Aktivteile sind insbesondere Teile, welche elektrische Wicklungen aufweisen. Die elektrische Maschine ist beispielsweise ein Elektromotor (Motor) oder ein Generator.

Der stehende und/oder rotierende Teil des Aktivteils eines Elektromotors oder Generators sind während des Betriebs zeitlich variablen Kräften aus dem Magnetfeld im Luftspalt ausgesetzt. Ist der stehende Teil des Aktivteils, oftmals das Blechpaket, mit einem Maschinengehäuse, -rahmen oder im Allgemeinen mit einer Tragstruktur verbunden, so werden die Verformungen und Kräfte, die im Aktivteil entstehen, in die das Blechpaket umgebende Struktur (Gehäuse, Rahmen, etc.) weitergeleitet und regen diese zu Schwingungen an. Diese (Maschinen-) Schwingungen sind im Allgemeinen unerwünscht und können die Betriebsfähigkeit einer Maschine kurz- und/oder langfristig einschränken. Zum einen können durch die Einwirkung der dynamischen Kräfte Ermüdungserscheinungen an den Strukturbauteilen eintreten, zum anderen sind die Maschinenschwingungen durch entsprechende Normung im Allgemeinen begrenzt und das Einhalten eines festgelegten Grenzwertes notwendig.

Aus der WO 2018/215323 A1 ist zum Beispiel ein Verfahren zum Herstellen einer schwingungsdämpfenden Strukturkombination zur Dämpfung von Schwingungen für bewegbare Massen mit einer ersten Struktur und einer weiteren Struktur bekannt.

Eine Aufgabe der Erfindung ist es eine elektrische Maschine elastischer aufzubauen, um Schwingungen zu reduzieren.

Eine Lösung der Aufgabe ergibt sich bei einer elektrischen Maschine nach Anspruch 1 bzw. bei einem Verfahren nach Anspruch 12 und bei einem Computerprogrammprodukt nach Anspruch 15.

Eine elektrische Maschine weist ein stationäres Aktivteil auf, wobei das stationäre Aktivteil mittels einer geometrischen Struktur elastisch angeordnet ist. Das stationäre Aktivteil ist insbesondere ein Stator der elektrischen Maschine. Weiterhin ist das stationäre Aktivteil insbesondere das Blechpaket des Stators der elektrischen Maschine. Die elektrische Maschine weist insbesondere ein Gehäuse auf. Das stationäre Aktivteil ist dabei mechanisch mit dem Gehäuse elastisch gekoppelt. Die Elastizität ergibt sich insbesondere durch eine geometrische Struktur, welche beispielsweise im Blechpaket integriert ist, im Gehäuse integriert ist und/oder in einem zwischen Element zwischen Gehäuse und Blechpaket integriert ist. Das Gehäuse der elektrischen Maschine weist insbesondere Befestigungselemente auf, um dieses auf einem Fundament zu befestigen, oder in einer Maschine zu befestigen, etc. Die geometrische Struktur zur elastischen Anordnung des stationären Aktivteils, wie beispielsweise eines Blechpaketes mit Statorwicklungen, ist insbesondere in der elektrischen Maschine positioniert. Die geometrische Struktur weist eine Form bzw. Gestalt auf, welche es ermöglicht Schwingungen aufzunehmen und insbesondere zu dämpfen. Die geometrische Struktur ist eine körperliche Ausgestaltung mit einer geometrischen Form, wobei die Form insbesondere einen Querschnitt der körperlichen Ausgestaltung bzw. der Struktur betrifft. So wird beispielsweise zwischen einem stehenden (also stationären) Aktivteil der elektrischen Maschine, wie zum Beispiel einen Blechpaket, und dem Gehäuse (zum Beispiel einer Tragstruktur, etc.) der elektrischen Maschine, eine der Gehäusestruktur zuzuschreibende Komponente gezielt flexibilisiert. Diese Flexibilisierung wird durch die geometrische Struktur erreicht. So sind keine zusätzlichen Bauteile erforderlich und die Flexibilisierung kann durch einfaches, lokales aber gezieltes Auftrennen der Struktur erzeugt werden. Das Auftrennen der Struktur gelingt beispielsweise durch Schlitze, Kerben, etc.

In einer Ausgestaltung der elektrischen Maschine ist das Aktivteil (insbesondere das Blechpaket) mittels der geometrischen Struktur bzw. über die geometrische Struktur im Gehäuse mit einer Tragstruktur bzw. mit dem Gehäuse elastisch verbunden. Die elastische Verbindung hat insbesondere eine dämpfende Wirkung. Für eine dämpfende Wirkung kann ein Federelement sorgen. Damit ist in einer Ausgestaltung die geometrische Struktur als ein Federelement ausbildbar. So kann beispielsweise eine Flexibilität zwischen Blechpaket und Gehäuse geschaffen werden, die die Durchlässigkeit für dynamische Kräfte bzw. die Kräfte, die aus einer dynamisch aufgeprägten Verformung entstehen, herabsetzt. Somit können anregende Kräfte bzw. Verformungen, die in das Gehäuse weitergeleitet werden würden, reduziert werden. Dadurch kann auch eine Verbesserung der auftretenden Maschinenschwingungen und der Ermüdungsfestigkeit erzielt werden. Durch die Verwendung der geometrischen Struktur ist es möglich im Gehäuse zusätzlich benötigten Bauraum gering zu halten bzw. auch die Herstellungskosten nicht unnötig zu erhöhen. Dies wäre beispielsweise bei der Verwendung von Gummidämpfern oder Spiralfedern der Fall (zus. Bauteile, Einschweißen der Bauteile, mechanische Bearbeitung der Federn, Montage und Ausrichtung des Blechpakets in den Federn).

In einer Ausgestaltung der elektrischen Maschine weist die geometrische Struktur Schlitze auf. Durch Schlitze lässt sich eine Geometrie erzielen, welche eine elastische Funktionalität aufweist. Eine Vielzahl von Schlitzen sind beispielsweise durch Stege voneinander getrennt. Die Vielzahl von Schlitzen sind insbesondere durch Stege und/oder Verbindungen zu einem nicht geschützten Bereich voneinander getrennt. Eine Flexibilisierung und damit eine elastische Statoraufhängung kann so zum Beispiel mit minimalem Platzbedarf ohne zusätzliche Bauteile durch einfaches Auftrennen bestehender dem Gehäuse zuzuschreibender Strukturen erzielt werden. Des Weiteren besteht die Möglichkeit einen Zwischenring, der den elastischen Bereich umfasst, aus einem zum Gehäuse und Blechpaket alternativen Material anzufertigen. Zudem kann dieser Zwischenring auch eine geometrische Struktur wie Schlitze oder Löcher aufweisen. Durch die geometrische Struktur lässt sich insbesondere eine Biegefeder bzw. eine Vielzahl Biegefedern ausbilden. Es ist eine platzsparende Anordnung der Biegefedern in Umfangsrichtung möglich. Hieraus kann sich auch die Möglichkeit einer Reihenschaltung dieser Biegefedern durch Anpassung der Anzahl der Schlitze in radialer Richtung ergeben. Die Biegefedern, welche eine geometrische Struktur darstellen, werden insbesondere aus einem strukturell tragenden Bauteil im Maschinengehäuse, durch einfaches, zumindest teilweises Auftrennen eines tragenden Bauteils des Gehäuses erzeugt. Dieses tragende Bauteil ist beispielsweise eine Mittelwand. Motoren und Generatoren können deutlich kleiner gebaut werden. Des Weiteren kann durch ein Einschrumpfen des Blechpakets in das Gehäuse eine einfache und kostengünstige Herstellung umgesetzt werden.

In einer Ausgestaltung der elektrischen Maschine sind die Schlitze zueinander radial und/oder in ihrer Winkelposition versetzt. Dies betrifft insbesondere eine Anordnung, bei welcher Schlitze zumindest teilweise kreisförmig und/oder kreissegmentförmig positioniert und/oder ausgeführt sind. Aus der Kreisförmigkeit ergibt sich ein Mittelpunkt. So können unterschiedliche Schlitze bezüglich ihres radialen Abstandes zu diesem Mittelpunkt unterschiedlich positioniert sein. Unterschiedliche Schlitze weisen damit eine unterschiedliche radiale Position auf. Alternativ oder in Kombination mit einer unterschiedlichen radialen Positionierung der Schlitze können unterschiedliche Schlitze auch ihre Winkelposition unterschiedlich angeordnet sein. Hieraus ergibt sich, dass unterschiedliche Schlitze sich in ihrer radialen Position unterscheiden können und gleichzeitig eine gleiche und/oder unterschiedliche Winkelposition einnehmen. Die Winkelposition ergibt sich insbesondere durch den Winkel zum Mittelpunkt, sodass Mittelpunktswinkel angepasst sind. Der Mittelpunkt entspricht insbesondere auch einer Drehachse der elektrischen Maschine, insbesondere des Rotors der elektrischen Maschine.

In einer Ausgestaltung der elektrischen Maschine weist die geometrische Struktur zumindest ein Segment eines Ringes auf, wobei dieses Segment eine Vielzahl von inneren Verbindungen aufweist und eine Vielzahl von äußeren Verbindungen aufweist, wobei die inneren Verbindungen und die äußeren Verbindungen zueinander versetz sind. Die inneren Verbindungen wie auch die äußeren Verbindungen können auch als innere Stege bzw. äußere Stege bezeichnet werden. Durch die Stege und Schlitze ergibt sich eine geometrische Struktur, welche elastisch ist und damit eine dämpfende Wirkung auf mit dieser Struktur verbundene Teile ausüben kann. Somit lässt sich eine in der elektrischen Maschine auftretende Schwingungen mithilfe der geometrischen Struktur dämpfen.

In einer Ausgestaltung der elektrischen Maschine sind die inneren Verbindungen zu den äußeren Verbindungen radial und/oder in ihrer Winkelposition versetzt sind. Es ergibt sich also eine entsprechende Variation von Versatz wie diese bereits bei den Schlitzen obig beschrieben ist.

In einer Ausgestaltung der elektrischen Maschine weist eine Mittelwand und/oder eine Druckplatte und oder ein Blechpaket und/oder ein Zwischenring die geometrische Struktur auf. Die geometrische Struktur weist insbesondere eine Vielzahl von Schlitzen, Stegen bzw. Verbindungen auf. Die elektrische Maschine kann eine oder mehrere Mittelwände aufweisen. In die Mittelwand, bzw. in die Mittelwände kann das Statorblechpaket der elektrischen Maschine eingefügt sein. Hierzu kann beispielsweise ein Strumpfprozess verwendet werden. Die zumindest eine Mittelwand ist als ein Teil eines Gehäuses der elektrischen Maschine ausführbar. Das Statorblechpaket der elektrischen Maschine weist insbesondere an den Stirnseiten Druckplatten auf. Druckplatten sind dicker als die Fläche des Blechpaketes. Die Druckplatten dienen insbesondere auch der Positionierung des Statorblechpaketes im Gehäuse der elektrischen Maschine.

Ist in einer Ausgestaltung zwischen dem stehenden Aktivteil (Blechpaket) und dem Gehäuse (Tragstruktur, etc.) eine der Gehäusestruktur zuzuschreibende Komponente gezielt flexibilisiert, sind zur Flexibilisierung keine zusätzlichen Bauteile erforderlich und die Flexibilisierung kann durch einfaches, lokales aber gezieltes Auftrennen einer bereits vorhandenen Struktur erzeugt werden, wobei von der Flexibilisierung insbesondere die sogenannten Mittelwände des Gehäuses der elektrischen Maschine betroffen sind. In der großen Bohrung (runde Ausnehmung, da kein Bohren notwendig sein muss) der Mittelwände befindet sich der Schrumpfsitz des Blechpakets des Stators. Das Prinzip ist jedoch nicht auf ein eingeschrumpftes Blechpaket beschränkt. Auch ein formschlüssig in die Bohrung (runde Ausnehmung) eingebrachtes Blechpaket ist möglich, ebenso wie eine Variante, bei der die Druckplatten des Blechpakets mit Innenringen verschraubt sind. Die Mittelwände können durch eine kreisförmige Anordnung von Schlitzen, welche insbesondere eine kreissegmentartige Form aufweisen, flexibilisiert sein.

In einer Ausgestaltung der elektrischen Maschine kann mit der Anzahl und/oder Länge der Schlitze am Umfang, ihrem Abstand zueinander, ihrer Dicke und/oder der Anzahl der radial ausgeführten Schlitze bzw. Schlitzbahnen, die resultierende Nachgiebigkeit gezielt beeinflusst werden. Durch eine weitere tangentiale Schlitzung in Umfangsrichtung (bspw. auf einem etwas größeren oder kleineren Durchmesser) können sozusagen die Federn in Reihe geschaltet werden und die Flexibilität weiter beeinflusst werden.

In einer Ausgestaltung der elektrischen Maschine sind zusätzliche Designvarianten ausbildbar bzw. miteinander kombinierbar:
- Einbringung der Schlitze im Stahlbau des Blechpakets bspw. den Druckplatten
- Einbringen der Schlitze in einen eigenständigen "Zwischenring", der zwischen Blechpaket und Gehäuse platziert wird und danach mit beiden Teilen verbunden wird,
- Verwendung eines Zwischenringes in einem vom Blechpaket und/oder vom Gehäuse abweichenden Material.

In einer Ausgestaltung kann damit, dass das Blechpaket in den durch die Schlitzung entstehenden Innenring eingeschrumpft werden kann, eine kostengünstige Herstellung erzielt werden (so ist eine einfache Montage ohne Ausrichten möglich).

In einer Ausgestaltung der elektrischen Maschine weist die die elektrische Maschine geometrische Strukturen unterschiedlicher Gestalt auf. So können geometrische Strukturen unterschiedliche Größen, Dicken und/oder Formen aufweisen. Schlitze können beispielsweise unterschiedlich lang, breit und/oder tief sein. Löcher können neben einer Schlitzform auch eine Kreisform oder Ellipsenform haben und allein, oder zusammen mit zumindest einem Schlitz, eine geometrische Struktur ausbilden.

In einer Ausgestaltung der elektrischen Maschine sind die geometrischen Strukturen in unterschiedlichen Materialien ausgebildet. Die unterschiedlichen Materialien weisen insbesondere eine unterschiedliche Steifigkeit, Elastizität und/oder Härte auf. Damit kann beispielsweise die Schwingungsdämpfung eingestellt werden.

In einer Ausgestaltung der elektrischen Maschine ist zumindest ein Schlitz als ein Kühlkanal ausgeführt. Durch den Kühlkanal kann ein Fluid wie Luft, Öl oder Wasser hindurchtreten, um eine Kühlung herbeizuführen. So können Schlitze als gezielte Luftführung zwischen Luftkammern des Motors dienen, was einen Verzicht auf zusätzliche Bypass-Öffnungen zwischen den Luftkammern (Bsp. Luft vom Wickelkopf zum Blechpaketrücken) ermöglicht.

In einer Ausgestaltung der elektrischen Maschine ist zumindest in einem Schlitz ein Element positioniert. Dieses Element ist beispielsweise ein aktives oder ein passives Element. Ein passives Element ist beispielsweise ein Material was innerhalb eines Schlitzes dessen Steifigkeit erhöht, in dem es zumindest teilweise den Schlitz ausfüllt. Ein aktives Element ist beispielsweise ein Sensor, wie ein Temperatursensor oder ein Vibrationssensor. So ergibt sich insbesondere die Möglichkeit der Überwachung von Zustandsänderungen und Diagnose der elektrischen Maschine (zum Beispiel: elektromagnetische Veränderungen und/oder geometrische Veränderungen im Luftspalt) durch Überwachung der durch die flexible Aufhängung gut messbaren Bewegung in den Schlitzen bzw. der Statorbewegung selbst.

In einer Ausgestaltung der elektrischen Maschine ermöglicht die Ausführung mit der Flexibilisierung durch Schlitze gleichzeitig eine einfache Möglichkeit der Transportsicherung des elastisch gelagerten Stators beispielsweise durch Einlegen von Keilen, so dass die "Federn" (die geometrischen Strukturen) vor mechanischer Überlast geschützt sind.

In einer Ausgestaltung der elektrischen Maschine ermöglicht die Ausführung mit Schlitzen gleichzeitig eine Möglichkeit zum Verstimmen des Systems beispielsweise durch das starre Überbrücken einzelner oder aller Schlitze. Somit kann noch weiter auf das Schwingungsverhalten Einfluss genommen werden. Diese Verstimmung ergibt sich insbesondere durch den Einsatz passiver Elemente, welche zum Beispiel ein Material wie Gummi, Silikon, Kunststoff, Harz, etc. aufweisen.

Die Lösung der Erfindung ergibt sich auch aus einem Verfahren zum Betrieb einer elektrischen Maschine, wobei die elektrische Maschine eine der, der hier beschriebenen Ausgestaltungen ist, wobei der Betrieb der elektrischen Maschine simuliert wird. Die Simulation betrifft dabei die Verbesserung der Konstruktion der elektrischen Maschine, den Betrieb der elektrischen Maschine (digitaler Zwilling), die Reparatur elektrischen Maschine und/oder ein Retrofit der elektrischen Maschine.

In einer Ausgestaltung des Verfahrens wird die elektrische Maschine mit unterschiedlichen geometrischen Strukturen simuliert, bzw. es werden elektrische Maschinen mit unterschiedlicher geometrischer Struktur simuliert. Damit kann beispielsweise deren Verhalten in unterschiedlichen Betriebszuständen simuliert und optimiert werden. Ein Optimierungskriterium ist beispielsweise die Reduzierung von Vibrationen.

In einer Ausgestaltung des Verfahrens wird das Schwingungsverhalten der elektrischen Maschine im Betrieb simuliert. So kann beispielsweise mittels eines damit simulierten digitalen Zwillings die mechanische Beanspruchung und damit die Alterung der elektrischen Maschine simuliert werden.

Eine Lösung der Aufgabe ergibt sich auch durch ein Computerprogrammprodukt, das computerausführbare Programmmittel aufweist und bei Ausführung auf einer Rechnereinrichtung mit Prozessormitteln und Datenspeichermitteln geeignet ist, wobei dieses zur Durchführung eines Verfahrens der beschriebenen Art dient.

In einer Ausgestaltung des Verfahrens betrifft das Verfahren folglich den simulierten Betrieb. Es wird also der Betrieb der elektrischen Maschine zumindest teilweise simuliert. Dadurch kann beispielsweise die Auslegung der elektrischen Maschine verbessert werden. Dies betrifft insbesondere deren Schwingungsverhalten bei unterschiedlichen Betriebszuständen. Die Simulation des dynamischen Verhaltens der elektrischen Maschine kann mit Daten aus der elektrischen Maschine erfolgen. So kann hierfür beispielsweise ein Drehmoment, eine Drehzahl und/oder eine Vibration gemessen werden. Diese Größen können als Eingangsgrößen für die Simulation verwendet werden.

Ist ein Computerprogrammprodukt vorgesehen, das computerausführbare Programmmittel aufweist und bei Ausführung auf einer Rechnereinrichtung mit Prozessormitteln und Datenspeichermitteln geeignet ist, ein Verfahren nach einer der beschriebenen Art durchzuführen, so ist dieses beispielsweise in der Cloud, auf einem Teststand und/oder auf einem Edge-Device ausführbar. So kann eine zugrundeliegende Aufgabenstellung durch ein Computerprogrammprodukt gelöst werden, das zu einem Simulieren eines Betriebsverhaltens der elektrischen Maschine ausgebildet ist. Das Computerprogrammprodukt kann dazu beispielsweise als sogenannter Digitaler Zwilling ausgebildet sein, welcher insbesondere simultan in Echtzeit zum Betrieb der elektrischen Maschine abläuft, oder auch in Kenntnis zukünftiger Sollwerte Betriebszustände der elektrischen Maschine in der Zukunft ermittelt. Hierdurch ist es beispielsweise möglich nicht erlaubte Betriebszustände vorab zu erkennen und durch Änderung von Sollwerten zu vermeiden.

Das Computerprogrammprodukt ist insbesondere zur Installation auf einer, einer Steuereinrichtung zugeordneten, Recheneinheit vorgesehen, wobei das Computerprogrammprodukt bei Ausführung auf der Recheneinheit zur Durchführung des hier beschriebenen Verfahrens ausgebildet ist.

Die Merkmale der einzelnen beanspruchten bzw. beschriebenen Gegenstände sind ohne Weiteres miteinander kombinierbar. Im Folgenden wird die Erfindung beispielhaft anhand von Figuren näher dargestellt und erläutert. Die in den Figuren gezeigten Merkmale können zu weiteren Ausführungsformen kombiniert werden, ohne die Erfindung zu verlassen. Gleiche Bezugszeichen haben in den verschiedenen Figuren die gleiche Bedeutung. Es zeigen schematisch:
- FIG 1: eine elektrische Maschine;
- FIG 2: ein Gehäuse;
- FIG 3: eine Mittelwand;
- FIG 4: eine Anordnung von Schlitzen;
- FIG 5: Elemente in Schlitzen;
- FIG 6: Schlitze unterschiedlicher Dicke und
- FIG 7: einen Ausschnitt eine Mittelwand.

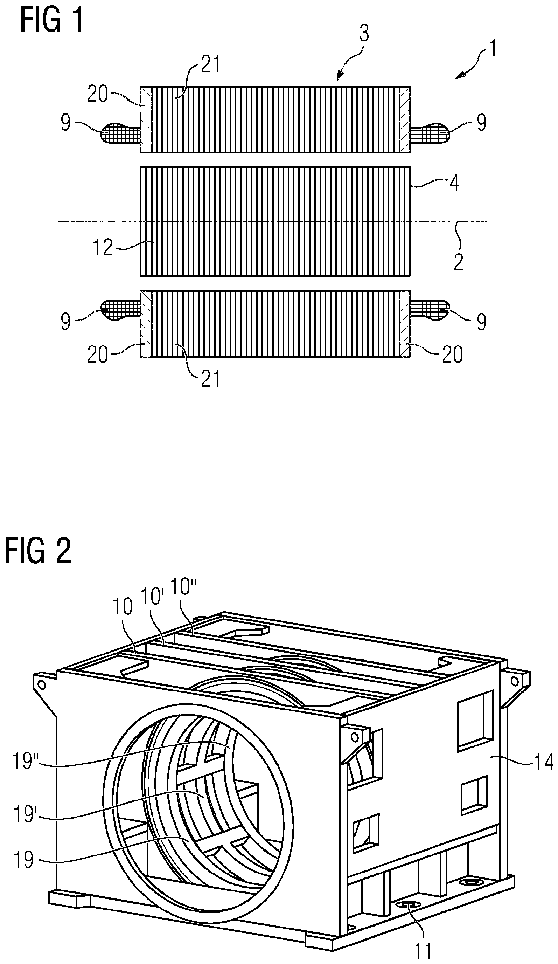

Die Darstellung nach Figur 1 zeigt eine elektrische Maschine 1. Diese elektrischen Maschine 1 weist ein stationäres Aktivteil 3 auf. Das stationäre Aktivteil 3 ist ein Stator der elektrischen Maschine 1. die elektrische Maschine weist weiterhin einen Rotor 4 auf. Der Rotor 4 ist um eine Achse 2 drehbar gelagert. Der Rotor 4 weist ein Blechpaket 12 auf. Die elektrische Maschine 1 ist beispielsweise eine Asynchronmaschine oder eine Synchronmaschine. Das stationäre Aktivteil 3 weist auch ein Blechpaket 21 mit Druckplatten 20 auf. Weiterhin weist das stationäre Aktivteil 3 Wickelköpfe 9 auf. In der schematischen Darstellung nach Figur 1 ist für die elektrische Maschine 1 kein Gehäuse dargestellt. Ein Beispiel für ein Gehäuse der elektrischen Maschine 1 ist in Figur 2 dargestellt.

Die Darstellung nach Figur 2 zeigt ein Gehäuse 14 einer elektrischen Maschine, wobei das Gehäuse 14 Mittelwände 10, 10', 10" aufweist. In diese Mittelwände 10, 10', 10" sind Mittelwandringer 19, 19", 19" integriert. In diese kann beispielsweise das Blechpaket des Stators (stationäres Aktivteil) eingeschrumpft werden bzw. sein. Das Gehäuse 14 weist weiterhin Befestigungen 11 auf, um dieses beispielsweise auf ein Fundament zu schrauben.

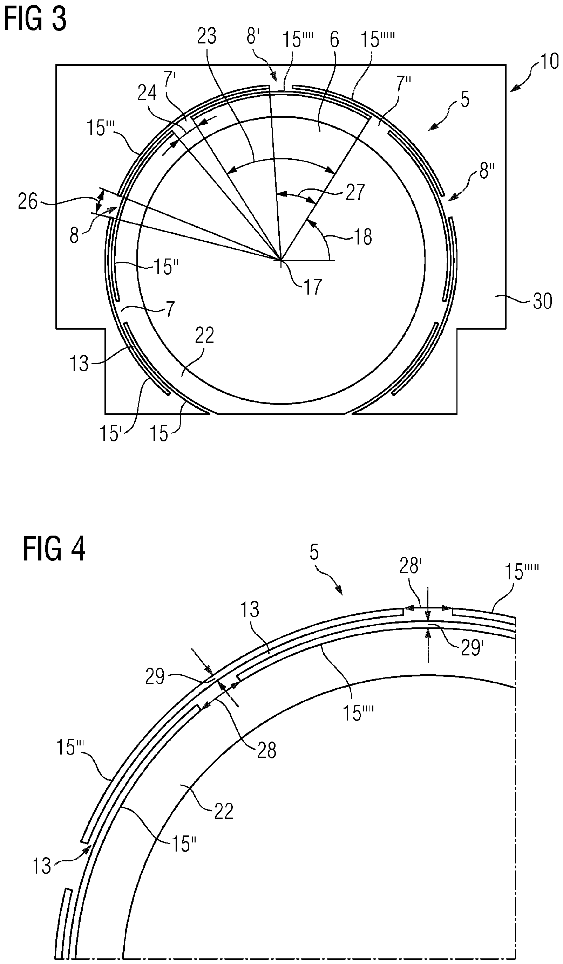

Die Darstellung nach Figur 3 zeigt eine Mittelwand 10 mit einer geometrischen Struktur 5. Die geometrische Struktur 5 weist Schlitze 15, 15", 15", 15"', 15"", 15""' auf. Diese sind kreisförmig angeordnet und voneinander beabstandet. Durch die geometrische Anordnung, also die geometrische Struktur, ergibt sich eine Elastizität in der Mittelwand. Ferner bildet sich durch die kreisförmige Anordnung der Schlitze ein Innenring 22 und ein Zwischenring 13 aus. Der Zwischenring bildet sich insbesondere zwischen den kreisförmig angeordneten und radial voneinander beabstandeten Schlitzen aus. Der Zwischenring 13 ist mit dem Innenring 22 (umlaufende Innenring) über innere Verbindungen 7, 7', 7" (innere Stege) verbunden. Der Zwischenring 13 ist auch mit einem äußeren Wandbereich 30 über äußere Verbindungen 8, 8', 8" (äußere Stege) verbunden. Die radiale kreisförmige Anordnung der Stege ist an einem Mittelpunkt 17 orientiert. Diese Mittelpunkt 17 fällt mit der Achse der elektrischen Maschine zusammen. Über den Mittelpunkt 17 lassen sich Mittelpunktswinkel 18 definieren, über welche Segmente dargestellt werden können. So erstreckt sich der Schlitz 15"" in einem Segment 6 über einen Segmentwinkel 23. Die Schlitze 15'" und 15"" sind versetzt, haben also einen Versatz 27. Die innere Verbindung 7' hat eine Länge gemäß der inneren Verbindungsegmentierung 27. Die äußere Verbindung 8' hat eine Länge gemäß der äußeren Verbindungsegmentierung 28. Die Darstellung gemäß Figur 3 zeigt eine geometrische Struktur 5, welche einstückig ausgeführt ist. Nicht dargestellt ist ein Beispiel in dem ein Zwischenring die geometrische Struktur 5 selbst aufnimmt und damit einen äußeren Bereich und einen inneren Ring ausbildet. Die Schlitzung der Mittelwände tangential zum Blechpaket führt zur Ausbildung von Biegefeder, die die flexible Aufhängung des Stators ermöglichen.

Die Darstellung gemäß Figur 4, zeigt einen Ausschnitt der geometrischen Struktur 5, wobei im Detail Dicken 29, 29' der Schlitze gezeigt sind. Diese dargestellten Dicken sind hier gleich, können aber in anderen Ausführungsvarianten, welche hier nicht dargestellt sind, auch unterschiedlich sein. Weiterhin sind umfängliche Abstände 28, 28' zwischen den Schlitzen dargestellt, wobei diese hier gleich sind aber in anderen Ausgestaltungen (hier nicht dargestellt) auch unterschiedliche Größen haben können. Durch derartige Variationen können Dämpfungseigenschaften bzw. Elastizität eingestellt bzw. variiert werden.

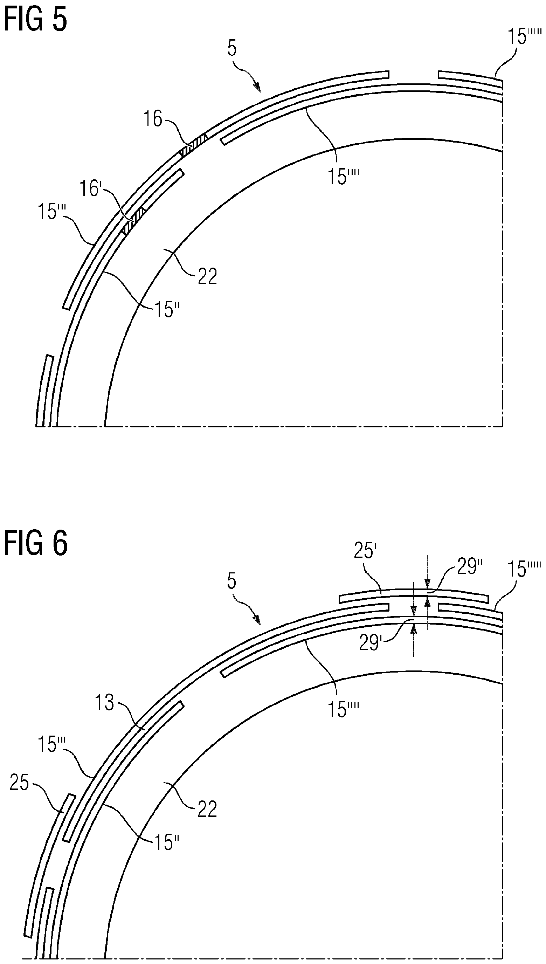

Die Darstellung gemäß Figur 5 zeigt die Anordnung von Elementen 16, 16' in Schlitzen 15", 15'". Das Element 16 ist beispielsweise ein Vollmaterial wie Gummi und ändert die Elastizität der durch die Schlitze ausgebildeten Feder. Das Element 16' ist beispielsweise ein Sensor für eine Temperatur oder eine Vibration.

Die Darstellung gemäß Figur 6 zeigt weitere Schlitze 25, 25' in einer dritten Reihung. Die Anzahl der Reihungen bzw. die Dicke 29, 29 und/oder Länge der Schlitze beeinflusst die Elastizität der geometrischen Struktur 5.

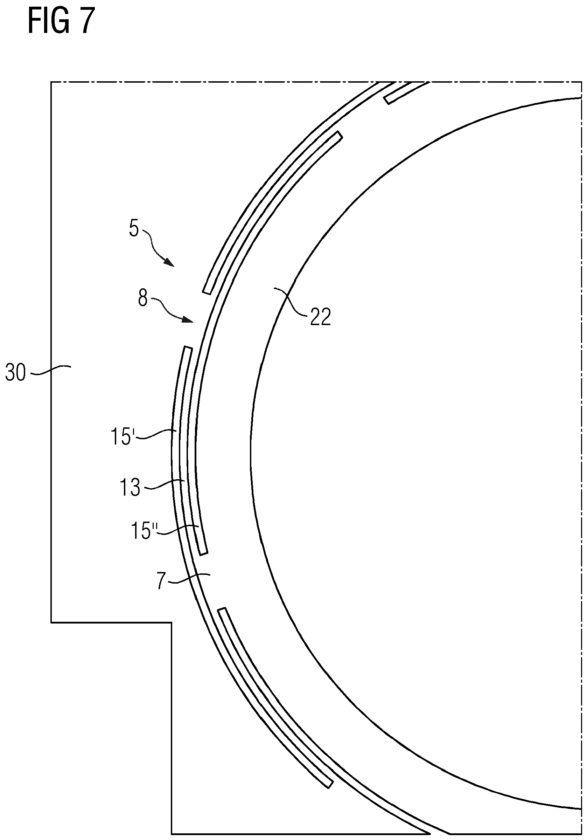

Die Darstellung nach Figur 7 zeigt die radiale Abfolge von Bereichen der geometrischen Struktur 5. Auf einen Innenring 22 folgen Schlitze 15" und innere Verbindungen 7 gefolgt von einem Zwischenring 13 der an weiter außen angeordneten Schlitzen 15' anschließt, wobei der Zwischenring 13 nach außen mit äußeren Verbindungen 8 verbunden ist.

## Patentansprüche

1. Elektrische Maschine (1), welche ein stationäres Aktivteil aufweist, wobei das stationäre Aktivteil (3) mittels einer geometrischen Struktur (5) elastisch angeordnet ist.

2. Elektrische Maschine (1) nach Anspruch 1, wobei die geometrische Struktur (5) Schlitze (15,15",15",15'") aufweist.

3. Elektrische Maschine (1) nach Anspruch 2, wobei die Schlitze (15,15',15",15'") zueinander radial und/oder in ihrer Winkelposition (Mittelpunktswinkel (xx) versetzt sind.

4. Elektrische Maschine (1) nach einem der Ansprüche 1 bis 3, wobei die geometrische Struktur (5) zumindest ein Segment (6) eines Ringes (9) aufweist, wobei dieses Segment (6) eine Vielzahl von inneren Verbindungen (Steg) (7, 7', 7'') aufweist und eine Vielzahl von äußeren Verbindungen (8, 8', 8'') aufweist, wobei die inneren Verbindungen (7, 7', 7") und die äußeren Verbindungen (8, 8', 8") zueinander versetz sind.

5. Elektrische Maschine (1) nach Anspruch 4, wobei die inneren Verbindungen (7, 7', 7") zu den äußeren Verbindungen (8, 8', 8") radial und/oder in ihrer Winkelposition (Mittelpunktswinkel (xx) versetzt sind.

6. Elektrische Maschine (1) nach einem der Ansprüche 1 bis 5, wobei eine Mittelwand (10) und/oder eine Druckplatte (11) und oder ein Blechpaket (12) und/oder ein Zwischenring (13) die geometrische Struktur (5) aufweist.

7. Elektrische Maschine (1) nach einem der Ansprüche 1 bis 6, wobei die elektrische Maschine (1) geometrische Strukturen (5) unterschiedlicher Gestalt aufweist.

8. Elektrische Maschine (1) nach einem der Ansprüche 1 bis 7, wobei die geometrischen Strukturen (5) in unterschiedlichen Materialien ausgebildet sind.

9. Elektrische Maschine (1) nach einem der Ansprüche 1 bis 8, wobei zumindest ein Schlitz (14) ein Kühlkanal ist.

10. Elektrische Maschine (1) nach einem der Ansprüche 1 bis 9, wobei in zumindest einem Schlitz (14) ein Element (16) positioniert ist.

11. Verfahren zum Betrieb einer elektrischen Maschine (1), wobei eine elektrische Maschine (1) nach einem der Ansprüche 1 bis 10 verwendet wird, wobei der Betrieb der elektrischen Maschine (1) simuliert wird.

12. Verfahren nach Anspruch 11, wobei elektrische Maschinen (1) mit unterschiedlicher geometrischer Struktur (5) simuliert werden.

13. Verfahren nach Anspruch 11 oder 12, wobei das Schwingungsverhalten der elektrischen Maschine (1) im Betrieb simuliert wird.

14. Computerprogrammprodukt, das computerausführbare Programmmittel aufweist und bei Ausführung auf einer Rechnereinrichtung mit Prozessormitteln und Datenspeichermitteln geeignet ist, ein Verfahren nach einem der Ansprüche 11 bis 13 durchzuführen.
